# EUROPEAN PATENT SPECIFICATION

(11) **EP 3 343 101 B1**
(45) Date of publication and mention of the grant of the patent: **16.06.2021**
(21) Application number: 17382914.4
(22) Date of filing: 28.12.2017
(51) Int. Cl.: F21V 8/00, F21S 43/27, F21S 43/247

(54) **LIGHTING DEVICE FOR A VEHICLE AND RELATED ATTACHMENT METHOD**
BELEUCHTUNGSVORRICHTUNG FÜR EIN FAHRZEUG UND ZUGEHÖRIGES BEFESTIGUNGSVERFAHREN
DISPOSITIF D'ÉCLAIRAGE POUR UN VÉHICULE ET PROCÉDÉ DE FIXATION ASSOCIÉ

(30) Priority: 30.12.2016 ES 201631715
(43) Date of publication of application: 04.07.2018
(73) Proprietor: Seat, S.A., 08760 Martorell (ES)
(72) Inventor: CASELLAS PALOMINO, NURIA, 08760 BARCELONA (ES); GIMENEZ VANO, MERITXELL, 08760 BARCELONA (ES); HUPEL, MARTIN, 08760 BARCELONA (ES)
(74) Representative: Elzaburu S.L.P.

(56) References cited:
- US-A1- 2012 020 107
- US-A1- 2013 322 104

## Description

The present invention relates to a lighting device for a vehicle according to Claim 1 that incorporates notable innovations and advantages, as well as the related attachment method thereof according to claim 6 which also incorporates notable innovations and advantages.

### BACKGROUND TO THE INVENTION

There is a current need in the automobile sector to improve the attachment and positioning of light-emitting diodes (LED) in relation to the corresponding light guide, and to address problems such as clips that are not robust, LEDs (normal or RGB) not being positioned exactly in front of the light guide, and losses caused by an air gap between the emission module and the light guide. It is also desirable for LEDs to be replaceable in case of failure thereof before expiry of the anticipated service life thereof.

Specifically, a device with a light guide that lies inside a seat for diffusing and distributing a beam of light from an LED is known from the prior art, as set out in document EP2775197 . The light guide includes a distal end and an assembly plate for assembly on a printed circuit board. The assembly plate is arranged between a mask and the printed circuit board to hold the light guide in position in front of an axis of the light guide. A method for assembling the lighting and/or signalling device is also included.

Said document discloses a relative positioning of the printed circuit board (PCB) and the light guide. Furthermore, the PCB is positioned in relation to the housing using a plurality of projections from the housing that are inserted into holes in the PCB. The light guide is positioned in relation to the PCB and the housing using a plurality of projections from the housing that pass through holes in the assembly plate of the light guide. The components (housing, light guide and PCB) are joined together by the projections from the housing. There is a further component, the mask, that pressurizes and packages the assembly. Although there are no screws, the assembly is complex, also requires an additional part, and does not offer the advantages of the present invention, as set out below.

More specifically, document EP2775197 has the following drawbacks:ln said document EP2775197 , the PCB is not easily swappable: The mask and the light guide have to be removed before the PCB can be removed. Workers in a workshop are commonly not permitted to handle light guides to ensure that same are not damaged.The invention disclosed in document EP2775197 is intended to control the air gap between the light emitter and the distal end of the light guide. However, the invention has shortcomings related to the centring of said light emitter in relation to the light guide: positioning is achieved by two projections relating to two orifices, which moreover are through holes, thereby preventing precise adjustment on account of the high tolerances of this type of join.

Moreover, the prior art, specifically document US20140029292 , also discloses a linear lighting device which includes an elongated light guide, a light source arranged at an end in a longitudinal direction of the light guide, and a housing accommodating the light guide and the light source. The light guide has a plurality of grooves arranged in the longitudinal direction of the light guide, and has a stepped cut-out at the other end, and a protruding portion on an inner surface of the housing which faces an aperture.

Said document discloses an attachment between the light guide and the housing, the housing having apertures designed to receive projections from the light guide to enable the positioning of same. An attachment between the module of the PCB and the housing are also disclosed. The figures show a cover of the housing that is an additional part required to put together the assembly containing the PCB. Said document does not address the problem of the relative positioning of the light guide and the PCB, given that the PCB is not positioned.

Consequently, there is an evident need for a lighting device for a vehicle and a related attachment method that simplifies assembly and is also detachable.

US 2013/322104 A1 discloses an optical unit, notably for a motor vehicle signaling and/or lighting device, comprising: at least one light source, notably an LED, at least one board bearing the light source, this board comprising an electric circuit to power the light source, a light guide made at least partially from a material through which light can travel, this guide being designed to accept light from the light source and to guide this light, the board is borne by the light guide.

US 2012/020107 A1 discloses a lighting system has one or more light guides capable of guiding light, each comprising a core and two optically smooth faces. A cavity adjacent to two of the optically smooth faces has an opening and a reflective-transmissive surface opposite the opening. A cover having a light source is proximate to and occludes the opening. A major portion of any light emitted from the light source is reflected by the reflective-transmissive surface of the cavity and is injected into the light guides, and a minor portion of any light emitted by the light source is transmitted through the reflective-transmissive surfaces of the cavity and emitted from the lighting system. A light injection coupler is also disclosed that has an optically transmissive housing and suitable for use to couple ends of at least one light guide thereby making a lighting system.

### DESCRIPTION OF THE INVENTION

Currently, lighting devices for a vehicle based on LEDs and light guides suffer from positioning and orientation problems between the light emitter or LED and the light transmission means or light guide. There are also difficulties relating to the replacement of such components during the service life of the device.

The present invention relates to a lighting device for a vehicle and a related attachment method that enables error-proof positioning, increasing efficiency by minimizing air gaps between the LED and the light guide and enabling the LED module to be replaced in the event of a fault. Furthermore and advantageously, the same simple assembly movements of the light guide and of the light emitter control the position of the light emitter in relation to the light guide. The centring of both components is particularly relevant in RGB diodes, where imprecise centring prevents generation of uniform colours along the entire light guide.

The following components are involved in the present invention: at least one light guide, a housing and at least one light emission module, which may include an LED, LED, a printed circuit board (PCB), connectors and related miscellaneous electronics.

The present idea is intended to position the light guide in relation to the module that comprises the PCB, LED and other electronics, by precisely positioning same in the housing, which comprises attachments for both components. The assembly movements are designed to be easy and error-proof.

Currently, in lighting devices for a vehicle that require an LED lighting module, a guide and a support, the module of the guide and of the support are normally separate. The idea of the present invention is for the module to be built into the device, thereby simplifying the final package and reducing light leaks. In the case of RGB systems, or colour diodes, the invention provides the advantage of improved alignment of the LED connection in relation to the light guide, thereby improving the colour mix and the lighting perceived, as mentioned previously.

Consequently and more specifically, the invention relates to a lighting device for a vehicle, in which the lighting device comprises a housing, at least one light emission module and at least one light guide, in which the at least one light guide transmits light emitted by the at least one light emission module, in which the housing has at least one first seat and at least one second seat, in which the lighting device comprises at least one first guide means, in which the at least one first guide means positions the at least one light guide in the at least one first seat, and at least one second guide means, in which the at least one second guide means positions the at least one light emission module in the at least one second seat. Thus, independent and complementary guide means (one for the light guide and another for the light emission module) are used to improve performance in terms of simplicity of assembly, and in terms of the precision of the relative reciprocal distance and orientation.

The essential characteristics of the invention include the presence of the housing, which in turn comprises first positioning or guide means for the light guide and second positioning or guide means for the emission module. Consequently, the at least one first guide means is independent of the at least one second guide means, which is important to reduce tolerances and ensure precise centring. The device therefore incorporates and includes both components. This enables the light guide to be correctly positioned against the LED, given that the light guide comprises at least one projection that can be coupled to the at least one first guide means, restricting two degrees of freedom, and the light emission module comprises at least one projection that can be coupled to the at least one guide means, restricting at least two degrees of freedom.

As such, the assembly system described for the lighting device according to the present invention can be used, where required, to assemble a plurality of light guides positioned on a single light emission module. Alternatively, two light emission modules can be positioned in relation to a single light guide, one at each end of the light guide, using the teachings disclosed in the present invention.

Thus, the lighting device facilitates assembly by workers at the assembly plant, and minimizes the possibility of the workers getting said assembly wrong, while enabling components to be swapped in the event of failure.

Advantageously, the at least one light emission module comprises at least one light emitter and in which the at least one light guide has at least one end, such that the at least one first guide means and the at least one second guide means position the at least one light emitter in front of the at least one end. This improves the centring between the light emitter or LED and the light guide in the plane YZ, i.e. in the plane perpendicular to the direction of the light guide, this factor being especially advantageous for RGB LEDs, which require perfect centring to generate uniform colours along the entire light guide. Centring means alignment of the axial axis of the light guide and the centre point of the light emitter on a single axis, as well as the orientation of the light coming out of said centre point of said light emitter.

Another beneficial effect is the reduction of light leaks between the LED emitter and the light guide in the same direction as the light guide, or axis X, in a three-dimensional system of axes with coordinates XYZ.

According to another aspect of the invention, the at least one first guide means comprises at least one third seat arranged in the housing, at least one first projection arranged on the at least one light guide, in which the at least one first projection can be guided in the at least one third seat, such that the at least one light guide is guided in the at least one first seat substantially in a first direction. Consequently, the movement of the light guide during assembly is linear and as such simple to perform by the assembly worker. In a preferred embodiment, said movement is complemented by the insertion of the first projection in the third seat, thereby adjusting the position of the light guide in a direction of the axis X, i.e. substantially the direction of the axis of the light guide itself.

More specifically, the at least one third seat has a narrowing in the first direction, such that the guiding or insertion of the first projection in the third seat is oriented towards the final insertion position thereof, the initial width being greater to enhance and facilitate the initial positioning of same at the beginning of said insertion, facilitating the operation.

In an embodiment of the invention, the at least one third seat comprises a first zone and a second zone, in which the dimensions of the first zone are substantially greater than the dimensions of the at least one first projection, and the dimensions of the second zone are substantially the same as the dimensions of the first projection. As such, the first projection is ultimately fitted into the bottom of the second zone of the third seat, such that the movement of the light guide is restricted both in the third longitudinal direction of the light guide and in the second transverse direction of the light guide, as well as in the direction of insertion into the housing.

Advantageously, the narrowing is progressive in the first direction, such as to facilitate (as mentioned) the insertion and assembly operation, improving the precision of the positioning of the light guide in the direction of the axis X, i.e. in the direction of its own axis. The narrowing of the third seat is funnel-shaped, i.e. the third seat narrows progressively to the final position.

According to another aspect of the invention, the first direction is substantially perpendicular to a third direction, in which the third direction is the emission direction of the at least one light emitter. Consequently, the assembly operation does not involve fitting, merely performance of a linear assembly movement, which results in improved assembly tolerances. Preventing the movement of the light guide in relation to the light emitter in the third direction as an assembly action helps to ensure correct centring, thereby minimizing misalignments and assembly errors. The third direction is the direction substantially perpendicular to the plane containing the light emitter.

According to another aspect of the invention, the at least one light emission module comprises a frame, in which the frame at least partially covers the at least one light emitter, at least one printed circuit board and at least one connection means. Said frame can also cover and house other electronic components, the heat sink, etc., simultaneously facilitating handling and assembly. As such, just one element needs to be handled, said element being positioned in relation to the housing, thereby facilitating assembly and connection of the light emitter.

According to the invention, the at least one second guide means comprises at least one slot arranged in the housing, and at least one second projection arranged on the frame, in which the at least one second projection is guided in the at least one slot, such that the at least one light emission module is positioned in the at least one second seat substantially in a second direction. This provides a positioning system between the light emission module and the housing, specifically rail guide means, by means of which a slot in the housing guides the assembly of the light emission module to the unique position of same in the housing. Thus, with a linear sliding movement in the second direction, the light emission module is inserted into the correct position in the housing, with no possibility of error.

The at least one second direction is substantially perpendicular to the third direction. The second direction, which is the insertion direction of the light emission module, and the third direction, which is the axial direction of the light guide, are complementary for the purpose of proper assembly.

According to another aspect of the invention, the frame comprises a first aperture, in which the first aperture extends in the second direction, such that the at least one end of the at least one light guide is partially covered by the frame of the at least one light emission module, the at least one light guide being positioned in the at least one first seat and the at least one light emission module being positioned in the at least one second seat. This prevents the light guide from becoming accidentally detached from the light emission module.

Thus, the end of the light guide is partially covered by the frame of the light emission module, thereby enabling the sequential assembly of both components, and also ensuring that the frame protects said zone of the end of the light guide. Additionally, the end of the light guide is in front of the at least one light emitter, minimizing the air gap between the end of the light guide and the light emitter, in the assembly position thereof.

The first direction and the second direction can be the same. Moreover, the first direction and the second direction can be perpendicular. Both the first direction and the second direction can be any direction that is perpendicular to the third direction. This ensures that the air gap between the light emitter and the end of the light guide is always controlled. In order to improve the centring and positioning between the two components, it is preferable for the first direction and the second direction to be the same or perpendicular, since this facilitates control of the position and tolerances between the end of the light guide and the light emission module.

According to another aspect of the invention, the housing comprises a second aperture, in which the second aperture extends in the second direction, such that a cable can be moved through the second aperture in the guide movement of the at least one light emission module in the at least one second seat, in which the cable is connected to the at least one connection means of the at least one light emission module. Consequently, the lighting device has an access suitable for the electric power cable. This characteristic enables an electrical connection to be made when the light emission module is outside the housing, facilitating the handling and connection of same. Subsequently, with a linear movement of the frame of the light emission module, said light emission module is positioned and attached in relation to the housing, maintaining the electrical connection previously made. Thus, the lighting device is not handled subsequently, which could cause movements and errors in the positioning of the components.

Furthermore, the light emission module is attached in the housing simply using a clip system provided in the injection moulds of the housing and of the frame of the light emission module.

The present invention also relates to an attachment method for the lighting device for a vehicle, including the following steps: i) positioning the at least one light guide in front of the at least one first seat of the housing, ii) sliding the at least one light guide by means of the at least one first guide means, in which the at least one light guide slides in the first direction, iii) positioning the at least one light emission module in front of the second seat of the housing, and iv) sliding the at least one light emission module by means of the at least one second guide means, in which the at least one light emission module slides in the second direction. Thus, given that the first direction and the second direction are complementary, the lighting device is perfectly assembled and the components thereof are attached to one another, thereby preventing accidental disassembly. Furthermore, two essentially linear movements of the light emission module and of the light guide in relation to the housing provides an exact positioning between same.

Furthermore, the step involving sliding the at least one light emission module comprises inserting the at least one end of the at least one light guide into the first aperture. Thus, said end of the light guide is seated in the exact position of same in said first aperture, as well as being positioned in front of the light emitter, thereby minimizing light leaks.

Moreover, the step of positioning the at least one light guide in front of the at least one first seat comprises positioning the at least one first projection in front of the at least one third seat such that the light guide is positioned on the axis X, and the end thereof at a suitable distance from the light emitter.

Complementarily, the step of positioning the at least one light emission module in front of the second seat comprises positioning the at least one second projection in front of the at least one slot, such that the light emission module is correctly seated and positioned in the housing.

According to another aspect of the invention, the attachment method for the lighting device comprises an additional step of connecting the cable to the at least one connection means of the at least one light emission module, in which the step involving connecting the cable is performed before the step involving sliding the at least one light emission module. This facilitates the operation for the assembly worker when making the connection outside the usage position. The aperture also enables the cable to be moved to the usage position thereof during the guide movement of the at least one light emission module.

The attached drawings show, by way of a nonlimiting example, a lighting device for a vehicle and related attachment method according to the invention. Other features and advantages of said lighting device for a vehicle and related attachment method to which the present invention relates, are set out in the description of a preferred, but non-exclusive, embodiment, which is illustrated by way of a nonlimiting example in the attached drawings, in which:

### SHORT DESCRIPTION OF THE FIGURES

Figure 1 is a perspective top view of the assembly of the light guide, the light emission module and the housing, once assembled, according to the present invention.
Figure 2 is a plan view of the assembly of the light guide, the light emission module and the housing, once assembled, according to the present invention.
Figure 3 is a perspective bottom view of the assembly of the light guide, the light emission module and the housing, once assembled, according to the present invention.
Figure 4 is a perspective view according to a section of Figure 3 of the assembly of the light guide, the light emission module and the housing, once assembled, according to the present invention.
Figure 5 is a profile view of the light emission module detailing the light emitter and the seat for the end of the light guide, according to the present invention.

### DESCRIPTION OF A PREFERRED EMBODIMENT

In consideration of the numbering adopted, the aforementioned figures show an example preferred embodiment of the invention that includes the parts and elements mentioned and described in detail below.

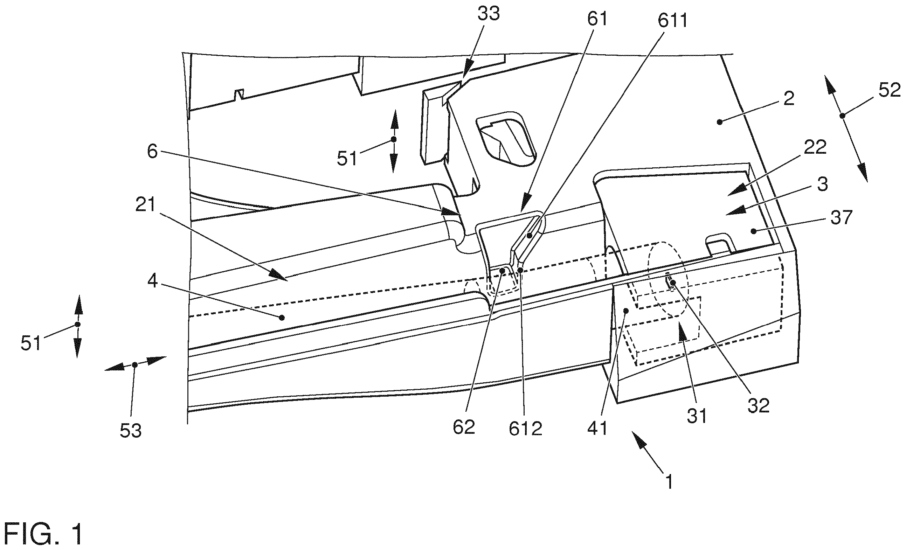

Consequently and as shown in Figures 1, 3 and 4 , the present invention relates to a lighting device 1 for a vehicle, in which the lighting device 1 comprises a housing 2, at least one light emission module 3 and at least one light guide 4, in which the at least one light guide 4 transmits light emitted by the at least one light emission module 3, in which the housing 2 has at least one first seat 21 an at least one second seat 22, in which the lighting device 1 comprises at least one first guide means 6, in which the at least one first guide means 6 positions the at least one light guide 4 in the at least one first seat 21, and at least one second guide means 7, in which the at least one second guide means 7 positions the at least one light emission module 3 in the at least one second seat 22.

The present invention includes the alternatives of having more than one light guide 4 positioned on a single light emission module 3, and a single light guide 4 with two light emission modules 3 at each end 41.

The light guide 4 is attached using small brackets or other clip systems arranged along the light guide 4.

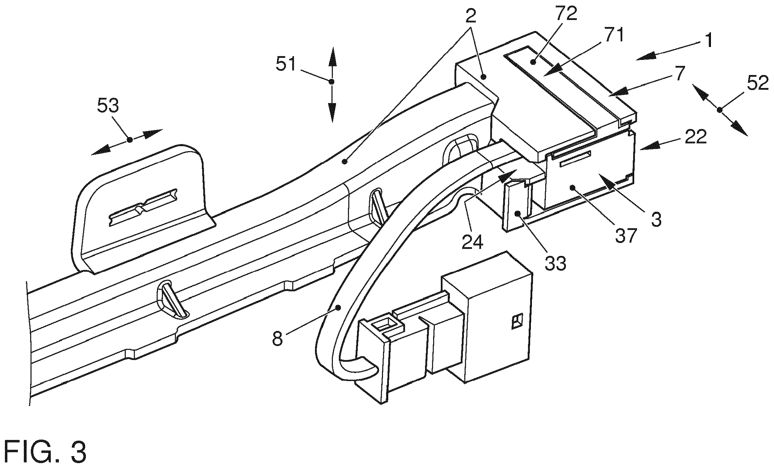

More specifically and as shown in Figures 1 and 3, the at least one light emission module 3 comprises at least one light emitter 32 and in which the at least one light guide 4 has at least one end 41, such that the at least one first guide means 6 and the at least one second guide means 7 position the at least one light emitter 32 in front of the at least one end 41.

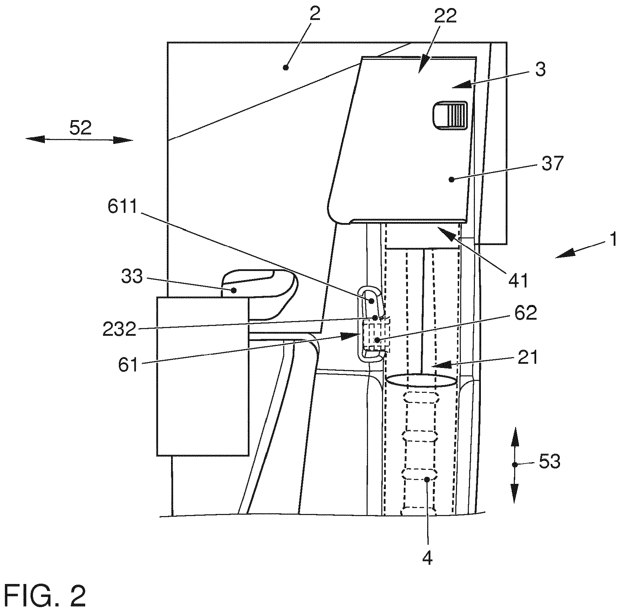

According to another aspect of the invention and as shown in Figures 1 and 2, the at least one first guide means 6 comprises at least one third seat 61 arranged in the housing 2, at least one first projection 62 arranged on the at least one light guide 4, in which the at least one first projection 62 can be guided in the at least one third seat 61, such that the at least one light guide 4 is guided in the at least one first seat 21 substantially in a first direction 51.

The components of the invention, namely the housing 2, the light guide 4 and the light emission module 3 (which includes electronics, LED, PCB, sink, connector, etc.) are obtained from the related injection mould, and no additional components are required for positioning and attachment.

As shown in detail in Figure 1, the light guide 4, which has a substantially elongate shape, is positioned in the housing 2 by the first guide means 6. Specifically, the first guide means 6 is formed by a first projection 62, in the form of a rectangular prism, which is taken from the same injection mould as the light guide 4. This first projection 62 is inserted and slid along a third seat 61 that is formed in the same injection mould as the housing 2. In order to improve and facilitate assembly of the light guide 4, this third seat 61 is funnel-shaped along the first assembly direction 51. Thus, the third seat 61 narrows to reach dimensions substantially equal to the dimensions of the first projection 62, such that the first projection 62 is partially held in the third seat 61. Thus, and by means of an essentially linear movement in the first direction 51 only, the position of the light guide 4 is restricted in the third direction 53, which is particularly important since it helps to control the air gap between the end 41 of the light guide 4 and the light emitter 32.

More specifically and as shown in Figures 1 and 2, the at least one third seat 61 comprises a narrowing in the first direction 51.

According to an embodiment of the invention and as shown in Figures 1, 2 and 4, the at least one third seat 61 comprises a first zone 611 and a second zone 612, in which the dimensions of the first zone 611 are substantially greater than the dimensions of the at least one first projection 62, and the dimensions of the second zone 612 are substantially the same as the dimensions of the first projection 62. This ensures the relative positioning of the light guide 4 and the housing 2.

More specifically and as shown in Figures 1 and 2, the narrowing is progressive in the first direction 51, forming a cone shape. The narrowing is located in the side of the first seat 21, is U-shaped and extends in the first direction 51.

According to another aspect of the invention and as shown in Figures 1, 3 and 4, the first direction 51 is substantially perpendicular to a third direction 53, in which the third direction 53 is the emission direction of the at least one light emitter 32. As mentioned, this point is particularly advantageous for controlling the air gap between the end 41 of the light guide 4 and the light emitter 32.

According to another aspect of the invention and as shown in Figures 1, 2, 3, 4 and 5, the at least one light emission module 3 comprises a frame 37, in which the frame 37 at least partially covers the at least one light emitter 32, at least one printed circuit board 35 and at least one connection means 34. Additionally, the frame 37 can include different essential components, such as a heat sink and other electronic components relevant to the operation of the light emitter 32, said components not being shown in the figures provided. The use of a light emission module 3 that comprises a frame 37 is advantageous because it simplifies handling by the worker during assembly operations.

On the other hand and as shown in Figure 3, the at least one second guide means 7 comprises at least one slot 71 arranged in the housing 2, and at least one second projection 72 arranged on the frame 37, in which the at least one second projection 72 can be guided in the at least one slot 71, such that the at least one light emission module 3 is positioned in the at least one second seat 22 substantially in a second direction 52. The second projection 72 is a rail or guide that extends in the second direction 52. This second projection 72 fits into the slot 71, which also extends in the second direction 52. This means that assembly comprises a linear movement in the second direction 52. This second projection 72 is obtained from the same injection mould as the frame 37. Furthermore, the slot 71 is also obtained from the same injection mould as the housing 2, on account of which the complexity and the manufacturing steps of the components of the present invention are not increased in any way, and the number of components required is minimized.

As shown in Figure 3, the frame 37, which comprises the light emission module 3, is mounted on the housing 2 with a linear movement in the second direction 52. This also limits the air gap between the light emission module 3 and the end 41 of the light guide 4.

According to a preferred embodiment of the invention and as shown in Figures 1, 3 and 4, the at least one second direction 52 is substantially perpendicular to the third direction 53.

According to the invention and as shown in the figures, the first direction 51 and the second direction 52 are perpendicular to the third direction 53. As mentioned, it is particularly beneficial in order to control the air gap between the light emitter 3 and the end 41 of the light guide 4. Furthermore, the first direction 51 is perpendicular to the second direction 52, thereby improving the centring between the light emitter 3 and the end 41 of the light guide 4.

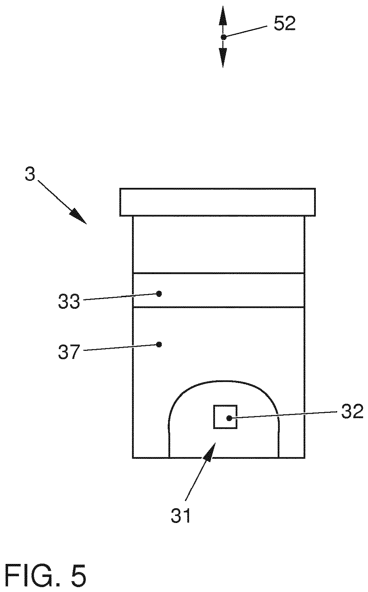

According to another aspect of the invention and as shown in Figures 1 and 5, the frame 37 comprises a first aperture 31, in which the first aperture 31 extends in the second direction 52, such that the at least one end 41 of the at least one light guide 4 is partially covered by the frame 37 of the at least one light emission module 3, the at least one light guide 4 being positioned in the at least one first seat 21 and the at least one light emission module 3 being positioned in the at least one second seat 22. This aperture is required to enable the sequential assembly of the light guide 4 and subsequent assembly of the light emission module 3.

According to another aspect of the invention and as shown in Figure 3, the housing 2 comprises a second aperture 24, in which the second aperture 24 extends in the second direction 52, such that a cable 8 can be moved through the second aperture 24 in the guide movement of the at least one light emission module 3 in the at least one second seat 22, in which the cable 8 is connected to the at least one connection means 34 of the at least one light emission module 3.

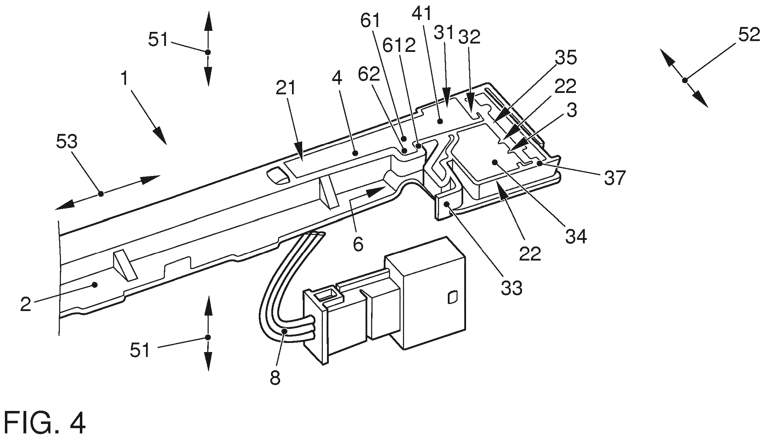

As shown in the cross section in Figure 4, the light emission module 3 has attachment means 33 for attaching the frame 37 to the housing 2, to hold same in the usage position. The attachment means 33 are preferably clips that are obtained from the same injection mould as the corresponding component, both the projection from the frame 37 and the projection or attachment means 33 on the housing 2 that fit between same to hold the light emission module 3, holding same essentially in the second direction 52. The attachment means 33 comprises a tab to facilitate extraction of the light emission module 3 from the housing 2. Said tab can be compressed to separate the clip mechanism holding the projection from the frame 37 with the projection from the housing 2.

Moreover, attachment means (not shown in the figures) are used to hold the light guide 4 in the usage position. These are for example U-shaped brackets that hold said light guide 4, which is normally circular. These brackets are arranged along the first seat 21 of the housing 2.

As shown in Figures 1 and 3, the present invention also relates to the attachment method for the lighting device 1 for a vehicle, including the following steps: i) positioning the at least one light guide 4 in front of the at least one first seat 21 of the housing 2, ii) sliding the at least one light guide 4 by means of the at least one first guide means 6, in which the at least one light guide 4 slides in the first direction 51, iii) positioning the at least one light emission module 3 in front of the second seat 22 of the housing 2, and iv) sliding the at least one light emission module 3 by means of the at least one second guide means 7, in which the at least one light emission module 3 slides in the second direction 52.

Furthermore and as shown in Figures 1 and 3, the step involving sliding the at least one light emission module 3 comprises inserting the at least one end 41 of the at least one light guide 4 into the first aperture 31.

Furthermore and as shown in Figures 1, 3 and 4, the attachment method for the lighting device 1 according to the invention comprises an additional step involving connecting the cable 8 to the at least one connection means 34 of the at least one light emission module 3, in which the step involving connecting the cable 8 is performed before the step involving sliding the at least one light emission module 3.

To reach the usage position, the attachment method comprises inserting the at least one first projection 62 of the at least one light guide 4 into the first zone 611 of the third seat 61, such that the at least one light guide 4 is located in the related usage position, attaching the clips of the attachment means 33 of the at least one light emission module 3 to the clips of the housing 2.

Consequently, the assembly of the lighting device 1 involves the following steps, provided schematically:
- assembling the components that make up the light emission module 3, such as the light emitter 32 and PCB, in the frame 37,
- connecting the cable 8 to the connection means 34,
- inserting the light guide 4 into the first seat 21 of the housing 2 by means of a linear movement in the first direction 51, using the first guide means 6, and
- inserting the frame 37 into the second seat 22 of the housing 2 by means of a linear movement in the second direction 52, using the second guide means 7.

Through this second movement of the frame 37, the end 41 of the light guide 4 is inserted into the first aperture 31 of the frame 37, such that the light emitter 32 is connected and perfectly positioned in relation to the light guide 4, providing the advantages relating to assembly and the quality of the light transmitted along the light guide 4 that are described above.

The details, forms, dimensions and other additional elements, as well as the components used in the lighting device for a vehicle and related attachment method may be replaced using other such appropriate elements that are technically equivalent, without thereby departing essentially from the invention or the scope defined by the claims included after the list below.

### List of reference signs:

- 1: lighting device
- 2: housing
- 21: first seat
- 22: second seat
- 24: second aperture
- 3: light emission module
- 31: first aperture
- 32: light emitter
- 33: attachment means
- 34: connection means
- 35: printed circuit board
- 37: frame
- 4: light guide
- 41: end
- 51: first direction
- 52: second direction
- 53: third direction
- 6: first guide means
- 61: third seat
- 611: first zone
- 612: second zone
- 62: first projection
- 7: second guide means
- 71: slot
- 72: second projection
- 8: cable

## Claims

1. A lighting device (1) for a vehicle, the lighting device (1) comprising a housing (2), at least one light emission module (3) and at least one light guide (4), irr wherein the at least one light guide (4) transmits light emitted by the at least one light emission module (3); the housing (2) comprising at least one first seat (21) and at least one second seat (22) wherein
- at least one first guide means (6) positions the at least one light guide (4) in the at least one first seat (21),
- at least one second guide means (7) positions the at least one light emission module (3) in the at least one second seat (22),
- the at least one light emission module (3) comprises at least one light emitter (32) and the at least one light guide (4) has at least one end (41), such that the at least one first guide means (6) and the at least one second guide means (7) position the at least one light emitter (32) in front of the at least one end (41),
- the at least one first guide means (6) comprises at least one third seat (61) arranged in the housing (2); and at least one first projection (62) arranged in the at least one light guide (4), wherein the at least one first projection (62) is guided in the at least one third seat (61), such that the at least one light guide (4) is guided in the at least one first seat (21) in a first direction (51);
- the at least one light emission module (3) comprises a frame (37), wherein the frame (37) at least partially covers the at least one light emitter (32), at least one printed circuit board (35) and at least one connection means (34);
- and the at least one second guide means (7) comprises at least one slot (71) arranged on the housing (2), and at least one second projection (72) arranged on the frame (37), wherein the at least one second projection (72) is guided in the at least one slot (71), such that the at least one light emission module (3) is positioned in the at least one second seat (22) in a second direction (52), **characterised in that**:
- the first direction (51) is perpendicular to a third direction (53), wherein the third direction (53) is the light emission direction of the at least one light emitter (32),
- the second direction (52) is perpendicular to the third direction (53), and
- the at least one end (41) of the at least one light guide (4) is partially covered by the frame (37), wherein the frame (37) comprises a first aperture (31) extending in the second direction (52).

2. The lighting device (1) according to Claim 1, wherein the at least one third seat (61) comprises a narrowing in the first direction (51).

3. The lighting device (1) according to Claim 2, wherein the at least one third seat (61) comprises a first zone (611) and a second zone (612), wherein the dimensions of the first zone (611) are substantially greater than the dimensions of the at least one first projection (62), and the dimensions of the second zone (612) are substantially the same as the dimensions of the at least one first projection (62).

4. The lighting device (1) according to Claim 2, wherein the narrowing is progressive in the first direction (51).

5. The lighting device (1) according to Claim 1, wherein the housing comprises a second aperture (24), the second aperture (24) extending in the second direction (52), such that a cable (8) can be moved through the second aperture (24) in the guide movement of the at least one light emission module (3) in the at least one second seat (22), wherein the cable (8) is connected to the at least one connection means (34) of the at least one light emission module (3).

6. Attachment method for the lighting device (1) for a vehicle according to any one of the preceding claims, including the following steps:
i) positioning the at least one light guide (4) in front of the at least one first seat (21) of the housing (2),
ii) sliding the at least one light guide (4) by means of the at least one first guide means (6) in the first direction (51),
iii) positioning the at least one light emission module (3) in front of the at least one second seat (22) of the housing (2), and
iv) sliding the at least one light emission module (3) by means of the at least one second guide means (7) in the second direction (52).

7. Attachment method for the lighting device (1) according to Claim 6, wherein the step involving sliding the at least one light emission module (3) comprises inserting the at least one end (41) of the at least one light guide (4) into the first aperture (31).

8. Attachment method for the lighting device (1) according to Claim 6, comprising an additional step involving connecting the cable (8) to the at least one connection means (34) of the at least one light emission module (3), wherein the step involving connecting the cable (8) is performed before the step involving the sliding of the at least one light emission module (3).

## Patentansprüche

1. Ein Beleuchtungsgerät (1) für ein Fahrzeug, wobei das Beleuchtungsgerät (1) ein Gehäuse (2), mindestens ein Lichtemissionsmodul (3) und mindestens einen Lichtleiter (4) umfasst,
wobei der mindestens eine Lichtleiter (4) das vom mindestens einen Lichtemissionsmodul (3) emittierte Licht durchlässt; wobei das Gehäuse (2) mindestens eine erste Befestigungsfläche (21) und mindestens eine zweite Befestigungsfläche (22) umfasst,
wobei
- mindestens eine erste Führungsvorrichtung (6) den mindestens einen Lichtleiter (4) in der mindestens einen ersten Befestigungsfläche (21) positioniert,
- mindestens eine zweite Führungsvorrichtung (7) das mindestens eine Lichtemissionsmodul (3) in der mindestens einen zweiten Befestigungsfläche (22) positioniert,
- das mindestens eine Lichtemissionsmodul (3) mindestens einen Lichtsender (32) umfasst und der mindestens eine Lichtleiter (4) mindestens ein Ende (41) aufweist, sodass die mindestens eine erste Führungsvorrichtung (6) und die mindestens eine zweite Führungsvorrichtung (7) den mindestens einen Lichtsender (32) vor dem mindestens einen Ende (41) positionieren,
- die mindestens eine erste Führungsvorrichtung (6) mindestens eine dritte, im Gehäuse (2) befindliche Befestigungsfläche (61) sowie mindestens eine erste, im mindestens einen Lichtleiter (4) befindliche Auskragung (62) aufweist; und
wobei die mindestens eine erste Auskragung (62) so in der mindestens einen dritten Befestigungsfläche (61) geführt wird, dass der mindestens eine Lichtleiter (4) in der mindestens einen ersten Befestigungsfläche (21) in einer ersten Richtung (51) geführt wird;
- das mindestens eine Lichtemissionsmodul (3) einen Rahmen (37) umfasst, wobei der Rahmen (37) den mindestens einen Lichtsender (32), mindestens eine Leiterplatte (35) und mindestens eine Verbindungsvorrichtung (34) zumindest teilweise abdeckt;
- und die mindestens eine zweite Führungsvorrichtung (7) mindestens einen am Gehäuse (2) befindlichen Schlitz (71) und mindestens eine am Rahmen (37) befindliche zweite Auskragung (72) aufweist, wobei die mindestens eine zweite Auskragung (72) im mindestens einen Schlitz (71) geführt wird, sodass das mindestens eine Lichtemissionsmodul (3) in der mindestens einen zweiten Befestigungsfläche (22) in einer zweiten Richtung (52) positioniert wird, und das sich dadurch auszeichnet, dass
- die erste Richtung (51) senkrecht zur dritten Richtung (53) verläuft, wobei es sich bei der dritten Richtung (53) um die Lichtemissionsrichtung des mindestens einen Lichtsenders (32) handelt,
- die zweite Richtung (52) senkrecht zur dritten Richtung (53) verläuft, und
- das mindestens eine Ende (41) des mindestens einen Lichtleiters (4) teilweise durch den Rahmen (37) abgedeckt wird, wobei der Rahmen (37) eine erste Öffnung (31) aufweist, die sich in der zweiten Richtung (52) erstreckt.

2. Das Beleuchtungsgerät (1) gemäß Anspruch 1, wobei die mindestens eine dritte Befestigungsfläche (61) eine Verengung in der ersten Richtung (51) aufweist.

3. Das Beleuchtungsgerät (1) gemäß Anspruch 2, wobei die mindestens eine dritte Befestigungsfläche (61) einen ersten Bereich (611) und einen zweiten Bereich (612) aufweist, wobei die Abmessungen des ersten Bereichs (611) im Wesentlichen größer sind als die Abmessungen der mindestens einen ersten Auskragung (62), und wobei die Abmessungen des zweiten Bereichs (612) im Wesentlichen den Abmessungen der mindestens einen ersten Auskragung (62) entsprechen.

4. Das Beleuchtungsgerät (1) gemäß Anspruch 2, wobei die Verengung in der ersten Richtung (51) zunimmt.

5. Das Beleuchtungsgerät (1) gemäß Anspruch 1, wobei das Gehäuse eine zweite Öffnung (24) aufweist, und wobei sich die zweite Öffnung (24) in der zweiten Richtung (52) erstreckt, sodass im Rahmen der Führungsbewegung des mindestens einen Lichtemissionsmoduls (3) in der mindestens einen zweiten Befestigungsfläche (22) ein Kabel (8) durch die zweite Öffnung (24) bewegt werden kann, wobei das Kabel (8) mit der mindestens einen Verbindungsvorrichtung (34) des mindestens einen Lichtemissionsmoduls (3) verbunden ist.

6. Befestigungsmethode für das Beleuchtungsgerät (1) für ein Fahrzeug gemäß einem der vorhergehenden Ansprüche, das die folgenden Schritte umfasst:
i) Positionieren des mindestens einen Lichtleiters (4) vor der mindestens einen ersten Befestigungsfläche (21) des Gehäuses (2),
ii) Verschieben des mindestens einen Lichtleiters (4) mithilfe der mindestens einen ersten Führungsvorrichtung (6) in die erste Richtung (51),
iii) Positionieren des mindestens einen Lichtemissionsmoduls (3) vor der mindestens einen zweiten Befestigungsfläche (22) des Gehäuses (2), und
iv) Verschieben des mindestens einen Lichtemissionsmoduls (3) mithilfe der mindestens einen zweiten Führungsvorrichtung (7) in die zweite Richtung (52).

7. Befestigungsmethode für das Beleuchtungsgerät (1) gemäß Anspruch 6, wobei das Verschieben des mindestens einen Lichtemissionsmoduls (3) das Einführen des mindestens einen Endes (41) des mindestens einen Lichtleiters (4) in die erste Öffnung (31) umfasst.

8. Befestigungsmethode für das Beleuchtungsgerät (1) gemäß Anspruch 6, die zudem das Verbinden des Kabels (8) mit der mindestens einen Verbindungsvorrichtung (34) des mindestens einen Lichtemissionsmoduls (3) umfasst, wobei das Verbinden des Kabels (8) vor dem Verschieben des mindestens einen Lichtemissionsmoduls (3) erfolgt.

## Revendications

1. Dispositif d'éclairage (1) pour un véhicule, ledit dispositif d'éclairage (1) comprenant un boîtier (2), au moins un module d'émission de lumière (3) et au moins un guide de lumière (4), dans lequel l'au moins un guide de lumière (4) transmet la lumière émise par l'au moins un module d'émission de lumière (3) ; le boîtier (2) comprenant au moins un premier siège (21) et au moins un deuxième siège (22), dans lequel
- au moins un premier moyen de guidage (6) positionne l'au moins un guide de lumière (4) dans l'au moins un premier siège (21),
- au moins un second moyen de guidage (7) positionne l'au moins un module d'émission de lumière (3) dans l'au moins un deuxième siège (22),
- l'au moins un module d'émission de lumière (3) comprend au moins un émetteur de lumière (32) et l'au moins un guide de lumière (4) comporte au moins une extrémité (41) de telle sorte que l'au moins un premier moyen de guidage (6) et l'au moins un second moyen de guidage (7) positionnent l'au moins un émetteur de lumière (32) devant l'au moins une extrémité (41),
- l'au moins un premier moyen de guidage (6) comprend au moins un troisième siège (61) agencé dans le boîtier (2) ; et
au moins une première saillie (62) disposée dans l'au moins un guide de lumière (4), dans lequel l'au moins une première saillie (62) est guidée dans l'au moins un troisième siège (61) de telle sorte que l'au moins un guide de lumière (4) est guidé dans l'au moins un premier siège (21) dans une première direction (51) :
- l'au moins un module d'émission de lumière (3) comprend un cadre (37), dans lequel le cadre (37) recouvre au moins partiellement l'au moins un émetteur de lumière (32), au moins une carte de circuit imprimé (35) et au moins un moyen de connexion (34) ; et
- l'au moins un second moyen de guidage (7) comprend au moins une fente (71) disposée sur le boîtier (2), et au moins une seconde saillie (72) disposée sur le cadre (37), dans lequel l'au moins une seconde saillie (72) est guidée dans l'au moins une fente (71) de telle sorte que l'au moins un module d'émission de lumière (3) est positionné dans l'au moins un deuxième siège (22) dans une deuxième direction (52), **caractérisé en ce que** :
- la première direction (51) est perpendiculaire à une troisième direction (53), dans lequel la troisième direction (53) est la direction d'émission de lumière de l'au moins un émetteur de lumière (32),
- la deuxième direction (52) est perpendiculaire à la troisième direction (53), et
- l'au moins une extrémité (41) de l'au moins un guide de lumière (4) est partiellement recouverte par le cadre (37), dans lequel le cadre (37) comprend une première ouverture (31) s'étendant dans la deuxième direction (52).

2. Dispositif d'éclairage (1) selon la revendication 1, dans lequel l'au moins un troisième siège (61) comprend un rétrécissement dans la première direction (51) .

3. Dispositif d'éclairage (1) selon la revendication 2, dans lequel l'au moins un troisième siège (61) comprend une première zone (611) et une seconde zone (612), dans lequel les dimensions de la première zone (611) sont sensiblement supérieures aux dimensions de l'au moins une première saillie (62), et les dimensions de la seconde zone (612) sont sensiblement les mêmes que les dimensions de l'au moins une première saillie (62).

4. Dispositif d'éclairage (1) selon la revendication 2, dans lequel le rétrécissement est progressif dans la première direction (51).

5. Dispositif d'éclairage (1) selon la revendication 1, dans lequel le boîtier comprend une seconde ouverture (24), la seconde ouverture (24) s'étendant dans la deuxième direction (52) de telle sorte qu'un câble (8) peut être déplacé à travers la seconde ouverture (24) dans le mouvement de guidage de l'au moins un module d'émission de lumière (3) dans l'au moins un deuxième siège (22), dans lequel
le câble (8) est connecté à l'au moins un moyen de connexion (34) de l'au moins un module d'émission de lumière (3).

6. Procédé de fixation du dispositif d'éclairage (1) pour un véhicule selon l'une quelconque des revendications précédentes, comprenant les étapes suivantes :
i) le positionnement de l'au moins un guide de lumière (4) devant l'au moins un premier siège (21) du boîtier (2),
ii) le glissement de l'au moins un guide de lumière (4) au moyen de l'au moins un premier moyen de guidage (6) dans la première direction (51),
iii)le positionnement de l'au moins un module d'émission de lumière (3) devant l'au moins un deuxième siège (22) du boîtier (2), et
iv) le coulissement de l'au moins un module d'émission de lumière (3) au moyen de l'au moins un second moyen de guidage (7) dans la deuxième direction (52).

7. Procédé de fixation du dispositif d'éclairage (1) selon la revendication 6, dans lequel l'étape consistant à faire glisser l'au moins un module d'émission de lumière (3) comprend l'insertion de l'au moins une extrémité (41) de l'au moins un guide de lumière (4) dans la première ouverture (31).

8. Procédé de fixation du dispositif d'éclairage (1) selon la revendication 6, comprenant une étape supplémentaire consistant à connecter le câble (8) à l'au moins un moyen de connexion (34) de l'au moins un module d'émission de lumière (3), dans lequel l'étape consistant à connecter le câble (8) est effectuée avant l'étape impliquant le glissement de l'au moins un module d'émission de lumière (3).
